(19)

Europäisches
Patentamt

European
Patent Office

Office européen
des brevets

(11) **EP 1 871 115 B1**

(12) **EUROPEAN PATENT SPECIFICATION**

(45) Date of publication and mention
of the grant of the patent:
**22.08.2018 Bulletin 2018/34**

(51) Int Cl.:
***H04N 19/56*** *(2014.01)*

(21) Application number: **07105701.2**

(22) Date of filing: **05.04.2007**

(54) **Motion estimation method and apparatus for fast motion estimation**

Bewegungsschätzungsverfahren und -vorrichtung zur schnellen Bewegungsschätzung

Procédé et appareil d'estimation du mouvement pour l'estimation de mouvements rapides

(84) Designated Contracting States:
**DE FR GB**

(30) Priority: **21.06.2006 KR 20060056071**

(43) Date of publication of application:
**26.12.2007 Bulletin 2007/52**

(73) Proprietor: **Samsung Electronics Co., Ltd.**
**Suwon-si, Gyeonggi-do, 443-742 (KR)**

(72) Inventors:
 • **Lee, Ho-jin**
  **c/o Samsung Advanced Institute of Technology**
  **Gyeonggi-do (KR)**
 • **Kim Do-hyung**
  **c/o Samsung Advanced Institute of Technology**
  **Gyeonggi-do (KR)**

 • **Lee, Si-hwa**
  **c/o Samsung Advanced Institute of Technology**
  **Gyeonggi-do (KR)**
 • **Lee, Sang-jo**
  **c/o Samsung Advanced Institute of Technology**
  **Gyeonggi-do (KR)**

(74) Representative: **Portch, Daniel et al**
**Elkington and Fife LLP**
**Prospect House**
**8 Pembroke Road**
**Sevenoaks, Kent TN13 1XR (GB)**

(56) References cited:
 **EP-A- 1 294 194    EP-A- 1 339 223**
 **EP-A2- 0 535 746    US-A- 5 786 860**

EP 1 871 115 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

The present invention relates to a method and apparatus for video encoding, and more particularly, to a motion estimation method and apparatus for fast motion estimation.

In order to achieve compression, temporal redundancy between adjacent pictures in a video sequence is removed. To remove the temporal redundancy, correlation between the adjacent pictures should be made known and so, block-matching motion estimation is generally used.

In particular, since motion estimation between a current picture and a reference picture is the most intensive computational part of video encoding, efficient motion estimation emerges as an important task in video encoding and thus various block-based motion estimation methods have been developed.

First, in a full search method, costs of all blocks in a search range of a reference picture are calculated and the block having the minimum cost is searched for. However, such a process requires a large amount of computation, which results in a failure to perform video encoding in real time. To solve this problem, fast block-matching motion estimation methods such as a pattern-based global search and a pattern-based local search are suggested. Examples of pattern-based global searches are a three-step search, a new three-step search, and a four-step search. Examples of pattern-based local searches, are a diamond search and a hexagon search. In the pattern-based local search, unlike in the pattern-based global search, a search is made in only a part of a search range and thus a search for a local minimum can be performed quickly. In the following description, the three-step search and the diamond search will be used as examples of the pattern-based global search and the pattern-based local search, respectively.

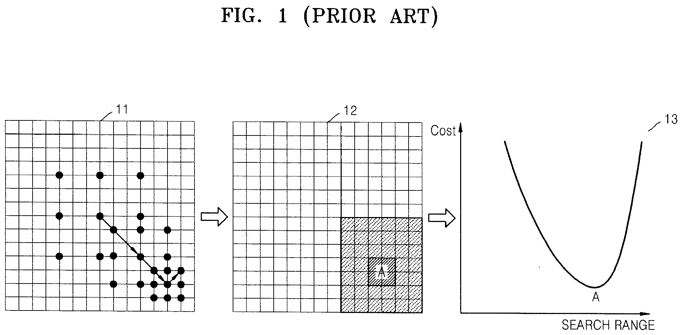

FIG. 1 illustrates a conventional three-step search.

A sample picture 11 shows a conventional three-step search algorithm. In a first step, costs of blocks specified by 9 points forming the largest size around a central point of a search range of a reference picture are calculated. In a second step, costs of blocks specified by 9 points forming the middle size around a point having the minimum cost among the costs calculated in the first step are calculated. In a third step, costs of blocks specified by 9 points forming the smallest size around a point having the minimum cost among the costs calculated in the second step are calculated. A block specified by a point having the minimum cost among the costs calculated in the third step is determined to be the best matching block of the current block.

A sample picture 12 shows a distribution map of the calculated costs according to the three-step search algorithm. In particular, in the sample picture 12, as the cost of a block decreases, the block is marked darker. A sample graph 13 shows a relationship between a search range and a cost. It can be seen from the sample graph 13 that the sample picture 12 has one global minimum.

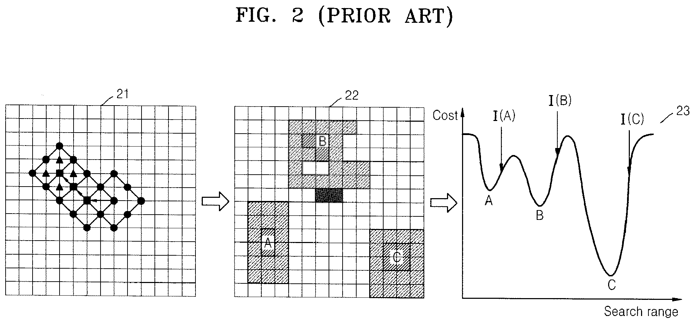

FIG. 2 illustrates a conventional diamond search.

A sample picture 21 shows a conventional diamond search algorithm. In a first step, costs of blocks specified by 9 points forming a diamond pattern around a central point of a search range of a reference picture are calculated. If the central point has the minimum cost among the costs calculated in the first step, a second step is skipped and a third step is performed. Otherwise, the second step is performed. In the second step, costs of blocks specified by 9 points forming the diamond pattern around a point having the minimum cost among the costs calculated in the first step are calculated. If the central point is the point having the minimum cost among the costs calculated in the second step, the third step is performed. Otherwise, the second step is repeated until the central point is the point having the minimum cost. In the third step, costs of blocks specified by 5 points forming the diamond pattern around a point having the minimum cost among the costs calculated in the second step are calculated. The block specified by a point having the minimum cost among the costs calculated in the third step is determined to be the best matching block of the current block.

A sample picture 22 shows a distribution map of the calculated costs according to the conventional diamond search algorithm. In particular, in the sample picture 22, as the cost of a block decreases, the block is marked darker. A sample graph 23 shows a relationship between a search range and a cost. It can be seen from the sample graph 23 that the sample picture 22 has three local minima.

In a video having a small and smooth motion change, a block matching cost generally has one global minimum or local minimum, i.e., a uni-modality feature. On the other hand, in a video having a large motion change, a block matching cost has a plurality of local minima, i.e., a multi-modality feature.

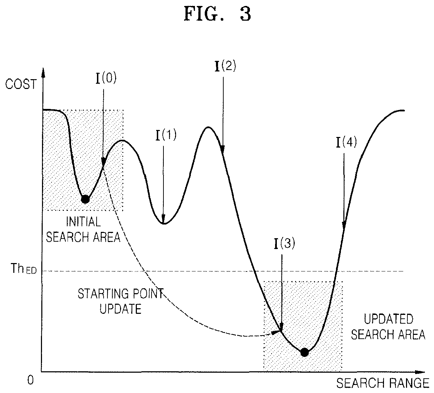

In the three-step search algorithm illustrated in FIG. 2, since one global minimum is searched in the entire search range, it is not difficult to search for a true minimum in the search range of a video having a large motion change. However, in the diamond search algorithm illustrated in FIG. 3, since one local minimum is searched in a portion of the search range, a point in the search range, which is not a true point, may be selected as a local minimum unless a starting point is selected as being sufficiently close to a global minimum in a video having a large motion change, i.e., a video whose block matching cost has the multi-modality feature. For example, if a starting point I(A) is selected, the diamond search algorithm is trapped in an inappropriate local minimum A. If a starting point 1(B) is selected, the diamond search algorithm is trapped in an inappropriate local minimum B.

European Patent Application Publication Number EP 1294194 A1 and United States Patent Number 5,786,860 both disclose a method and apparatus for encoding video.

European Patent Application Publication Number EP 0535746 A2 relates to a method of estimating motion vectors for blocks of pixels in a frame of a video sequence.

XP 10650590 discloses a merging procedure for variable-size block motion estimation.

SUMMARY OF THE INVENTION

The aforementioned problems are solved by the features of the independent claims. Further embodiments are the subject-matter of the dependent claims.

BRIEF DESCRIPTION OF THE DRAWINGS

The above and other features and advantages of the present invention will become more apparent by describing in detail exemplary embodiments thereof with reference to the attached drawings in which:

FIG. 1 illustrates a conventional three-step search;
FIG. 2 illustrates a conventional diamond search;
FIG. 3 illustrates a starting point selection mechanism according to an embodiment of the present invention;
FIG. 4 is a block diagram of a video encoder according to an embodiment of the present invention;
FIG. 5 is a detailed block diagram of a motion estimation unit illustrated in FIG. 4;
FIG. 6 is a flowchart illustrating a video encoding method according to an embodiment of the present invention;
FIG. 7 is a flowchart illustrating a motion estimation method according to an embodiment of the present invention;
FIG. 8 is a detailed flowchart of an operation of determining a threshold Th in order to determine a suitable starting point as illustrated in FIG. 7;
FIG. 9 is a detailed flowchart of an operation of generating reconstructed pictures as illustrated in FIG. 8
FIG. 10 is a detailed flowchart of operations illustrated in FIG. 7, where at least one additional starting point 1(1) to I(N) is selected and Cost(1) to Cost(N), indicating differences between the current block and blocks of the reference picture specified by the selected additional starting points 1(1) to I(N), are calculated;
FIG. 11 is a detailed flowchart of the same operations detailed in FIG. 10, but for a case where a cost calculation unit terminates a cost calculation when its calculated cost is less than a threshold for the additional starting point selected by a starting point selection unit; and
FIG. 12 illustrates results of a comparison between the performances of a conventional motion estimation method and a motion estimation method according to an embodiment of the present invention.

DETAILED DESCRIPTION OF THE INVENTION

Hereinafter, exemplary embodiments of the present invention will be described in detail with reference to the accompanying drawings.

In order to solve a conventional problem in that a point that is not a true minimum may be selected as a local minimum in a search range unless the starting point is selected as being close to a global point for a video whose block matching cost has a multi-modality feature, i.e., to prevent inappropriate starting point selection, a starting point selection mechanism according to an embodiment of the present invention introduces a threshold Th(L) as a criterion for selecting a starting point that is suitable for searching in a reference picture for the best matching block of the current block.

Referring to FIG. 3, if an initial starting point 1(0) is selected, a local search algorithm performs a search toward points having smaller costs than the initial starting point 1(0) and thus is trapped in an inappropriate local minimum. In the start point selection mechanism according to an embodiment of the present invention the problem is solved by changing a starting point from the initial starting point 1(0) to a new starting point 1(3) having a smaller cost than the threshold Th(L).

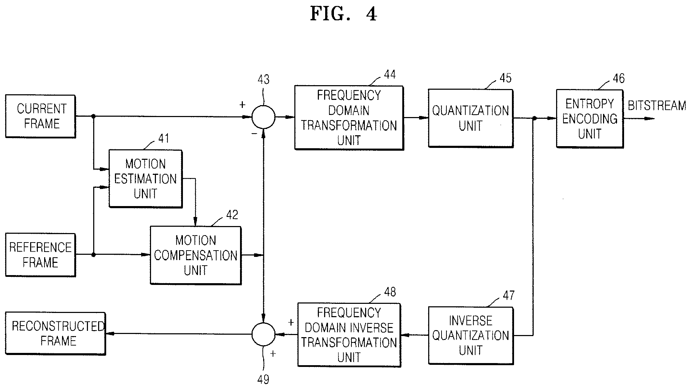

FIG. 4 is a block diagram of a video encoder according to an embodiment of the present invention.

Referring to FIG. 4, the video encoder includes a motion estimation unit 41, a motion compensation unit 42, a subtraction unit 43, a frequency domain transformation unit 44, a quantization unit 45, an entropy encoding unit 46, an inverse quantization unit 47, a frequency domain inverse transformation unit 48, and an addition unit 49.

The motion estimation unit 41 calculates, for each block of the current picture, a motion vector corresponding to a displacement between the current block in the current picture and a block corresponding to the current block in a reference picture using a threshold that is a criterion for selecting a starting point suitable for searching in the reference picture for the best matching block of the current block. More specifically, the motion estimation unit 41 compares a cost, which indicates a difference between the current block of the current picture and a block of the reference picture specified by a starting point, with the threshold and then searches for the best matching block of the current block of the current picture selectively from the starting point according to the comparison result, thereby calculating a motion vector.

The motion compensation unit 42 generates a prediction picture for the current picture from the reference picture using the motion vector calculated by the motion estimation unit 41 for each block of the current picture.

The subtraction unit 43 subtracts the prediction picture generated by the motion compensation unit 42 from the current picture, thereby generating a difference between the current picture and the prediction picture.

The frequency domain transformation unit 44 transforms the difference generated by the subtraction unit 43 from a color domain to a frequency domain. Transformation from the color domain to the frequency domain may be discrete hadamard transformation (DHT) or discrete cosine transformation (DCT)-based integer transformation.

The quantization unit 45 quantizes values transformed by the frequency domain transformation unit 44. In other words, the quantization unit 45 divides frequency component values transformed by the frequency domain transformation unit 44 by a quantization parameter and approximates the results to integers.

The entropy encoding unit 46 generates a bitstream by performing entropy encoding on values quantized by the quantization unit 45 and outputs the bitstream. The entropy encoding may be context-adaptive variable length coding (CAVLC) or context-adaptive binary arithmetic coding (CABAC).

The inverse quantization unit 47 inversely quantizes values quantized by the quantization unit 45. In other words, the inverse quantization unit 47 reconstructs the frequency component values by multiplying the integers approximated by the quantization unit 45 by using the quantization parameter.

The frequency domain inverse transformation unit 48 transforms the frequency component values reconstructed by the inverse quantization unit 47 from a frequency domain to a color domain, thereby reconstructing the difference between the current picture and the prediction picture.

The addition unit 49 adds the difference reconstructed by the frequency domain inverse transformation unit 48 to the prediction picture generated by the motion compensation unit 42, thereby generating a reconstructed picture.

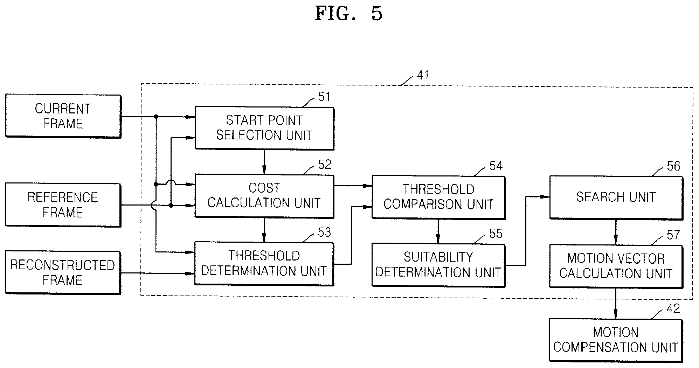

FIG. 5 is a detailed block diagram of the motion estimation unit 41 of FIG. 4.

Referring to FIG. 5, the motion estimation unit 41 of FIG. 4 includes a starting point selection unit 51, a cost calculation unit 52, a threshold determination unit 53, a threshold comparison unit 54, a suitability determination unit 55, a search unit 56, and a motion vector calculation unit 57.

The starting point selection unit 51 selects an initial starting point I(0) for searching in a search range of a reference picture for an N x M block that best matches a current N x M block of the current picture. In an embodiment of the present invention, an N x M block may be any one of a 16 x 16 block, an 8 x 8 block, and a 4 x 4 block. In particular, the 16 x 16 block is called a macroblock. For example, the starting point selection unit 51 may select an initial starting point based on a previous result about blocks of the reference picture which best match neighboring blocks of the current block of the current picture.

In addition, if Cost (0) calculated by the cost calculation unit 52 is higher than the threshold Th(L) determined by the threshold determination unit 53 as a result of a comparison performed by the threshold comparison unit 54, the starting point selection unit 51 selects in the search range of the reference picture at least one additional starting points I(1) to I(N) for searching for the best matching block of the current block, in addition to the initial starting point I(0). Here, N is a natural number greater than 1.

The cost calculation unit 52 calculates Cost (0) indicating a difference between the current block and a block of the reference picture, specified by the initial starting point I(0) selected by the starting point selection unit 51. Here, the block of the reference picture specified by the initial starting point I(0) may be a block whose starting point is a top-left, top-right, or central point.

The cost calculation unit 52 calculates Cost(1) to Cost(N) indicating differences between the current block and blocks of the reference picture specified by the additional starting points 1(1) to I(N) selected by the starting point selection unit 51. A sum of absolute differences (SAD) may be taken as a representative example of a cost. In other words, the cost calculation unit 52 may calculate an SAD indicating a difference between a current block A and a block B of the reference picture specified by a starting point selected by the starting point selection unit 51, using Equation 1. In particular, in Equation 1, N x M indicates the size of the current block A and the block B and Vx and Vy indicate a displacement of the block B with respect to the current block A.

$$SAD\,(V_x,V_y) = \sum_{n,m=0}^{n-1}\sum |F(N,M)-G(N+V_x,M+V_y)| \qquad \dots\dots\dots\dots\dots\dots\dots\dots (1)$$

The threshold determination unit 53 determines the threshold Th(L) that is a criterion for selecting a starting point suitable for searching for a block of a reference picture that best matches the current block. In particular, in an embodiment of the present invention, the threshold determination unit 53 determines the threshold Th(L) in the following two ways. In the first way, the threshold determination unit 53 determines the threshold Th(L) using a test sequence including a plurality of pictures.

More specifically, the threshold determination unit 53 generates reconstructed pictures of the original pictures constituting a test sequence using a random threshold and calculates a peak signal to noise ratio (PSNR) between the original pictures constituting the test sequence and the reconstructed pictures. In other words, the threshold determination unit 53 may calculate the PSNR using Equation 2. In Equation 2, n indicates the number of bits of the pictures constituting the test sequence and a mean squared error (MSE) indicates the mean squared error between the original pictures and the reconstructed pictures.

$$PSNR_{dB} = 10 \log_{10} \frac{(2^n - 1)^2}{MSE} \qquad\qquad \ldots\ldots\ldots\ldots\ldots\ldots\ldots\ldots\ldots. (2)$$

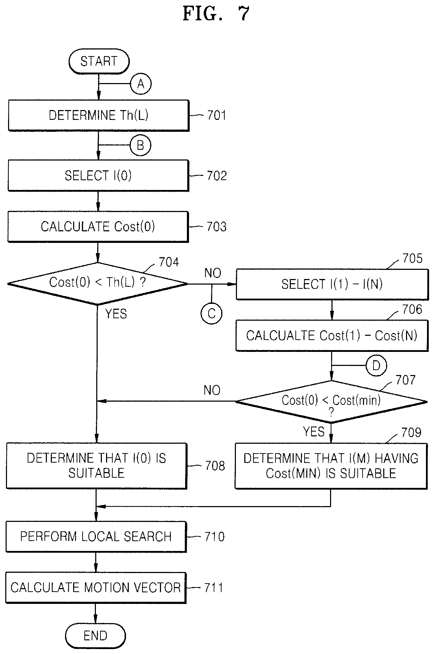

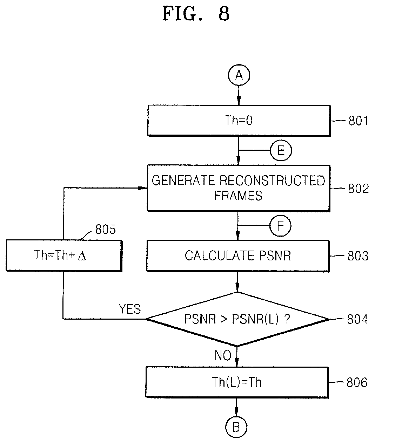

Next, the threshold determination unit 53 compares the calculated PSNR with a PSNR(L) that is a standard for video display quality. If the PSNR is greater than the PSNR(L), the threshold determination unit 53 increases a threshold Th by a predetermined value and repeats the above process. Unless the PSNR is greater than the PSNR(L), the threshold determination unit 53 determines the threshold Th to be the threshold Th(L) that is a criterion for selecting a starting point suitable for searching for a block of a reference picture that best matches the current block. Threshold determination will be described in more detail with reference to FIGS. 7 and 8.

In the second way that the threshold determination unit 53 determines the threshold Th(L), the threshold determination unit 53 uses a cost indicating a difference between a neighboring block of the current block and a block of the reference picture corresponding to the neighboring block. The neighboring block of the current block may be a block located above, above and to the right side of, or above and to the left side of the current block. The threshold determination unit 53 may determine the threshold Th(L) in various ways according to applications as follows.

The threshold determination unit 53 may determine as the threshold Th(L), the maximum value among Cost(U) indicating a difference between a block located above the current block and a block of a reference picture corresponding to the block located above the current block, Cost(R) indicating a difference between a block located above and to the right side of the current block and a block of the reference picture corresponding to the block located above and to the right side of the current block, and Cost(L) indicating a difference between a block located to the left side of the current block and a block of the reference picture corresponding to the block located to the left side of the current block.

The threshold determination unit 53 may also determine as the threshold Th(L), the average value of Cost(U) indicating a difference between a block located above the current block and a block of a reference picture corresponding to the block located above the current block, Cost(R) indicating a difference between a block located above and to the right side of the current block and a block of the reference picture corresponding to the block located above and to the right side of the current block, and Cost(L) indicating a difference between a block located to the left side of the current block and a block of the reference picture corresponding to the block located to the left side of the current block.

The threshold determination unit 53 may also determine as the threshold Th(L), the minimum value among Cost(U) indicating a difference between a block located above the current block and a block of a reference picture corresponding to the block located above the current block, Cost(R) indicating a difference between a block located above and to the right side of the current block and a block of the reference picture corresponding to the block located above and to the right side of the current block, and Cost(L) indicating a difference between a block located to the left side of the current block and a block of the reference picture corresponding to the block located to the left side of the current block.

The threshold comparison unit 54 compares Cost(0) calculated by the cost calculation unit 52 with the threshold Th(L) determined by the threshold determination unit 53. The threshold comparison unit 54 compares the minimum value Cost(min) among Cost(1) to Cost(N) calculated by the cost calculation unit 52 with Cost(0) calculated by the cost calculation unit 52.

If Cost(0) calculated by the cost calculation unit 52 is less than the threshold Th(L) determined by the threshold determination unit 53, the suitability determination unit 55 determines that the initial starting point I(0) selected by the starting point selection unit 51 is suitable for searching in a reference picture for the best matching block of the current block.

If the minimum value Cost(min) among Cost(1) to Cost(N) calculated by the cost calculation unit 52 is less than the calculated Cost(0), the suitability determination unit 55 determines that the additional starting point I(M) having Cost(min) is suitable for searching in a reference picture for the best matching block of the current block.

The search unit 56 searches in a search range of the reference picture for the best matching block of the current block according to a predetermined local search algorithm, starting with the starting point determined by the suitability determination unit 55 to be suitable for searching for the best matching block of the current block. If the predetermined local search algorithm is a diamond search algorithm, the search unit 56 searches in a search range of the reference picture for the best matching block of the current block according to a diamond pattern prescribed in the diamond search algorithm, starting with the starting point determined by the suitability determination unit 55 to be suitable for searching for the best matching block of the current block. The diamond search algorithm is already described with reference to FIG. 2.

The motion vector calculation unit 57 calculates a motion vector corresponding to the displacement between the current block and the block found by the search unit 56.

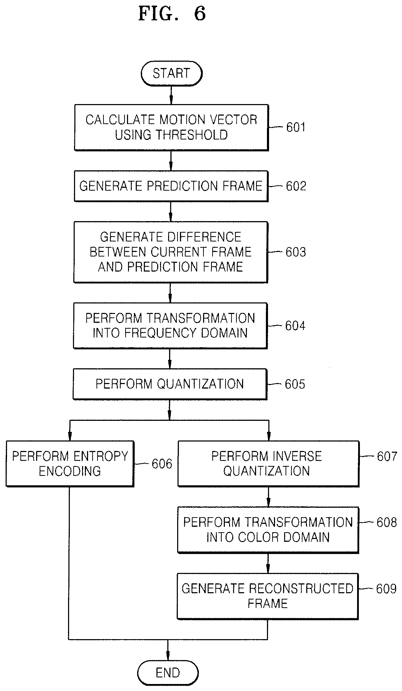

FIG. 6 is a flowchart illustrating a video encoding method according to an embodiment of the present invention.

Referring to FIG. 6, the video encoding method includes operations that are processed sequentially by the video encoder illustrated in FIG. 4. Thus, the description regarding the video encoder illustrated in FIG. 4 is also applied to the video encoding method according to an embodiment of the present invention.

In operation 601, the video encoder calculates, for each block of the current picture, a motion vector corresponding to a displacement between the current block of the current picture and a block of a reference picture corresponding to the current block using a threshold that is a criterion for determining a starting point suitable for searching in the reference picture for the best matching block of the current block.

In operation 602, the video encoder generates a prediction picture of the current picture from the reference picture using the motion vector calculated for each block of the current picture in operation 601.

In operation 603, the video encoder subtracts the prediction picture from the current picture to generate a difference between the current picture and the prediction picture.

In operation 604, the video encoder transforms the generated difference from a color domain to a frequency domain.

In operation 605, the video encoder quantizes values transformed in operation 604.

In operation 606, the video encoder generates a bitstream by performing entropy encoding on the quantized values and outputs the bitstream.

In operation 607, the video encoder inversely quantizes the quantized values.

In operation 608, the video encoder transforms frequency component values reconstructed in operation 607 from the frequency domain to the color domain, thereby reconstructing the difference between the current picture and the prediction picture.

In operation 609, the video encoder adds the reconstructed difference to the prediction picture, thereby generating a reconstructed picture.

FIG. 7 is a flowchart illustrating a motion estimation method according to an embodiment of the present invention.

Referring to FIG. 7, the motion estimation method includes operations that are processed sequentially by the motion estimation unit 41 illustrated in FIG. 5. Thus, the description made regarding the motion estimation unit 41 illustrated in FIG. 5 is also applied to the motion estimation method according to an embodiment of the present invention.

In operation 701, the video encoder (the motion estimation unit 41?) determines a threshold Th that is a criterion for determining a starting point suitable for searching in the reference picture for the best matching block of the current block.

In operation 702, the video encoder selects the initial starting point 1(0) for searching in the search range of the reference picture for the best matching block of the current block.

In operation 703, the video encoder calculates Cost(0) indicating a difference between the current block and the block of the reference picture specified by the selected initial starting point 1(0).

In operation 704, the video encoder compares the calculated Cost(0) with the determined threshold Th. If Cost(0) is less than the determined threshold Th, the video encoder performs operation 705. Otherwise, the video encoder performs operation 708.

In operation 705, the video encoder selects at least one additional starting points I(1) to I(N) for searching in the search range of the reference picture for the best matching block of the current block, in addition to the selected initial starting point I(0).

In operation 706, the video encoder calculates Cost(1) to Cost(N) indicating differences between the current block and blocks of the reference picture specified by the selected additional starting points I(1) to I(N).

In operation 707, the video encoder compares the minimum value Cost(min) among the calculated Cost(1) to Cost(N) with the calculated Cost(0). If Cost(min) is greater than Cost(0), the video encoder performs operation 708. Otherwise, the video encoder performs operation 709.

In operation 708, the video encoder determines that the initial starting point I(0) selected in operation 702 is suitable for searching for the best matching block of the current block.

In operation 709, the video encoder determines that the additional starting point I(M) having the minimum value Cost(min) among the calculated Cost(1) to Cost(N) is suitable for searching for the best matching block of the current block.

In operation 710, the video encoder searches in the reference picture for the best matching block of the current block according to a predetermined local search algorithm, starting with the starting point determined in operation 708 or 709 to be suitable for searching for the best matching block of the current block.

In operation 711, the video encoder calculates a motion vector corresponding to the displacement between the current block and the block found in operation 710.

FIG. 8 is a detailed flowchart of operation 701 of FIG. 7.

Referring to FIG. 8, operation 701 includes the following operations. In particular, the flowchart of FIG. 8 corresponds to the first way of determining the threshold as described above.

In operation 801, the video encoder determines the threshold Th to be 0.

In operation 802, the video encoder generates reconstructed pictures of the original pictures constituting a test sequence using the determined threshold Th.

In operation 803, the video encoder calculates a PSNR between the original pictures and the reconstructed pictures.

In operation 804, the video encoder compares the calculated PSNR with a PSNR(L) that is a standard for video display quality. If the calculated PSNR is greater than the PSNR(L), the video encoder performs operation 805. Otherwise, the video encoder performs operation 707.

In operation 805, the video encoder increases the determined threshold Th by a predetermined value and performs operation 802.

In operation 806, the video encoder determines the determined threshold Th to be a threshold Th(L) that is a criterion for selecting a starting point that is suitable for searching in the reference picture for the best matching block of the current block.

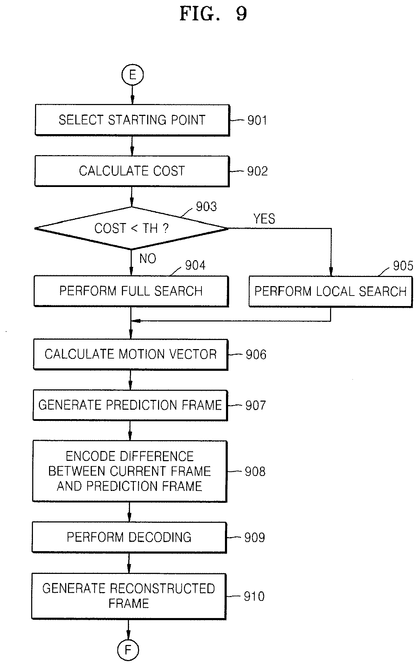

FIG. 9 is a detailed flowchart of operation 802 illustrated in FIG. 8.

Referring to FIG. 9, operation 802 illustrated in FIG. 8 includes the following operations. In particular, the flowchart of FIG. 9 indicates a processing order in a block level, e.g., in a macroblock level. On the other hand, the flowchart of FIG. 8 indicates a processing order in a sequence level composed of a plurality of pictures.

In operation 901, the video encoder selects a starting point for searching in the search range of the reference picture for the best matching block of the current block of the current picture among the original pictures constituting the test sequence for each block of the original picture.

In operation 902, the video encoder calculates, for each block of the original picture, a cost indicating a difference between the current block and a block of the reference picture specified by the selected starting point.

In operation 903, the video encoder compares, for each block of the original picture, the calculated cost with the determined threshold Th. If the calculated cost is greater than the determined threshold Th, the video encoder performs operation 904. Otherwise, the video encoder performs 905.

In operation 904, the video encoder searches over the full search range of the reference picture for the best matching block of the current block according to a full search algorithm for each block of the original picture.

In operation 905, the video encoder searches in the search range of the reference picture for the best matching block of the current block according to a predetermined local search algorithm, starting with the selected starting point.

In operation 906, the video encoder calculates, for each block of the original picture, a motion vector corresponding to the displacement between the current block and the block found in operation 905.

In operation 907, the video encoder generates the prediction picture of the current picture from the reference picture using the motion vectors calculated in operation 906.

In operation 908, the video encoder encodes a difference between the current picture and the prediction picture. In general, encoding in operation 908 means encoding performed by the frequency domain transformation unit 44 and the quantization unit 45, but it can be understood by those of ordinary skill in the art that the encoding may further include other encoding processes.

In operation 909, the video encoder decodes the encoding result of operation 908. In general, decoding in operation 909 means decoding performed by the inverse quantization unit 47 and the frequency domain inverse transformation unit 48, but it can be understood by those of ordinary skill in the art that some processes of the decoding may be omitted or other decoding processes may be added to the decoding.

In operation 910, the video encoder adds the decoding result of operation 909 to the generated prediction picture, thereby generating a reconstructed picture.

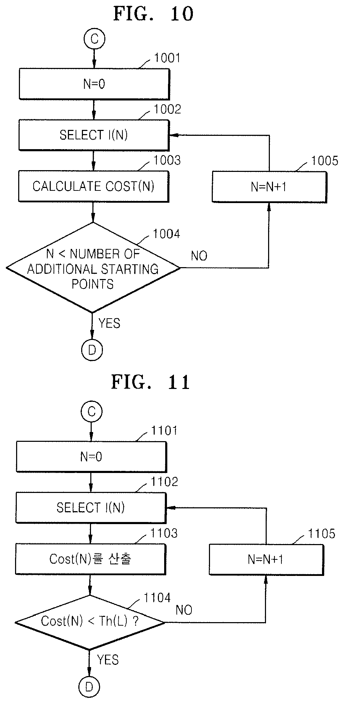

FIG. 10 is a detailed flowchart of operations 705 and 706 illustrated in FIG. 7, according to another embodiment of the present invention.

Referring to FIG. 10, operations 705 and 706 illustrated in FIG. 7 include the following operations. In particular, the flowchart illustrated in FIG. 10 shows a case where the cost calculation unit 52 calculates costs for all the additional starting points selected by the starting point selection unit 51.

In operation 1001, the video encoder determines N to be 0.

In operation1002, the video encoder selects the starting point I(N) for searching in the search range of the reference picture for the best matching block of the current block.

In operation 1003, the video encoder calculates Cost(N) indicating a difference between the current block and a block of the reference picture specified by the selected starting point I(N).

In operation 1004, the video encoder performs operation 1005 if N is less than the number of additional starting points. Otherwise, the video encoder performs operation 707.

In operation 1005, the video encoder increases N by 1 and performs operation 1002.

FIG. 11 is a detailed flowchart of operations 705 and 706 illustrated in FIG. 7.

Referring to FIG. 11, operations 705 and 706 illustrated in FIG. 7 include the following operations. In particular, the flowchart illustrated in FIG. 11 shows a case where the cost calculation unit 52 terminates the cost calculation when its calculated cost is less than a threshold for the additional starting point selected by the starting point selection unit 51.

In operation 1101, the video encoder determines N to be 0.

In operation 1102, the video encoder selects the starting point I(N) for searching in the search range of the reference picture for the best matching block of the current block.

In operation 1103, the video encoder calculates Cost(N) indicating a difference between the current block and the block of the reference block specified by the selected starting point I(N).

In operation 1104, the video encoder compares the calculated Cost(N) with the threshold Th(L). If the calculated Cost(N) is greater than the threshold Th(L), the video encoder performs operation 1105. Otherwise, the video encoder performs operation 707.

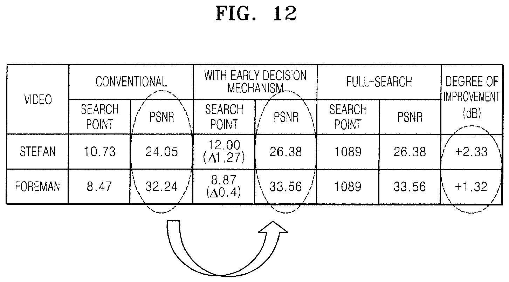

FIG. 12 illustrates results of a comparison between the performances of a conventional motion estimation method and a motion estimation method according to an embodiment of the present invention.

Referring to FIG. 12, the conventional motion estimation method exhibits a PSNR value of 24.05 with respect to a Stefan image and a PSNR value of 32.24 with respect to a foreman image. On the other hand, the motion estimation method according to an embodiment of the present invention exhibits a PSNR value of 26.38 with respect to the Stefan image and a PSNR value of 33.56 with respect to the foreman image. In other words, the motion estimation method has a display quality reproduction performance that is nearly equal to that of a full search algorithm. Such a performance is obtained by solving a problem of a local minimum that may occur due to inappropriate selection of a starting point.

The present invention can also be embodied as a program that can be implemented on a computer and a general-purpose digital computer executing the program using a computer-readable recording medium. Examples of the computer readable recording medium include magnetic recording media such as read-only memory (ROM), random-access memory (RAM), floppy disks, and hard disks, optical data storage devices such as CD-ROMs and digital versatile disks (DVDs), and carrier waves such as transmission over the Internet.

According to the present invention, only when a cost indicating a difference between the current block and a block of a reference picture specified by a starting point is less than a predetermined threshold, can a local search be performed from the starting point, thereby solving a conventional problem, in that a point that is not a true minimum is selected as a local minimum in a search range of the reference picture. In other words, it is possible to search in a search range for a local minimum that is a true minimum for a video having a large motion change, i.e., a video whose block matching cost has a multi-modality feature.

In addition, according to the present invention, a motion vector is calculated using a threshold that is a criterion for determining a starting point suitable for searching in the reference picture for the best matching block of the current block and a video is compressed using the calculated motion vector, thereby maintaining the efficiency of the conventional local search algorithm while supporting display quality that is equivalent to that of a full-search algorithm.

While the present invention has been particularly shown and described with reference to exemplary embodiments thereof, it will be understood by those of ordinary skill in the art that various changes in form and details may be made therein without departing from the scope of the present invention as defined by the following claims.

## Claims

**1.** A motion estimation method for video encoding comprising the steps of:

(a) comparing a cost indicating a difference between a current block of a current picture and a block of a reference picture specified by a starting point with a predetermined threshold;
(b) selectively searching for the best matching block of the current block from the starting point according to the comparison result of (a); and
(h) determining the predetermined threshold that is a criterion for selecting a starting point suitable for searching in the reference picture for the best matching block of the current block,

and **characterised in that** the step (h) of determining comprises determining the predetermined threshold using costs indicating differences between neighboring blocks of the current block and blocks of the reference picture corresponding to the neighboring blocks..

**2.** The motion estimation method of claim 1, wherein (b) comprises searching for the best matching block of the current block from the starting point if the cost is less than the predetermined threshold.

**3.** The motion estimation method of claim 1, further comprises (c) selecting at least one additional starting point in addition to the starting point if the cost is not less than the predetermined threshold.

**4.** The motion estimation method of claim 3, further comprising:

(d) comparing the minimum cost among costs indicating differences between the current block and blocks of the reference picture specified by the additional starting points with the cost indicating the difference between the current block and the block of the reference picture specified by the starting point; and
(e) searching in the reference picture for the best matching block of the current block from the additional starting block having the minimum costs if the minimum cost is less than the cost indicating the difference between the current block and the block of the reference picture specified by the starting point.

**5.** The motion estimation method of claim 3, further comprising:

(f) comparing the minimum cost indicating the difference between the current block and the block of the reference picture specified by the additional starting point with the predetermined threshold; and
(g) selecting another additional starting point in addition to the additional starting points if the minimum cost is greater than the predetermined threshold.

**6.** The motion estimation method of claim 1, wherein the step (h) of determining comprises determining the predetermined threshold using a cost indicating a difference between a block located above the current block and a block of the reference picture corresponding to the block located above the current block, a cost indicating a difference between a block located above and to the right side of the current block and a block of the reference picture corresponding to the block located above and to the right side of the current block, and a cost indicating a difference between a block located to the left side of the current block and a block of the reference picture corresponding to the block located to the left side of the current block.

**7.** The motion estimation method of any preceding claim, wherein the step (b) of selectively searching for the best matching block comprises performing a search according to a predetermined local search algorithm.

**8.** A computer-readable recording medium having recorded thereon a program for implementing a motion estimation method according to any preceding claim.

**9.** A motion estimation apparatus of a video encoder **characterized by** comprising:

a comparison unit (41) for comparing a cost indicating a difference between a current block of a current picture and a block of a reference picture specified by a starting point with a predetermined threshold;
a search unit (56) for selectively searching for the best matching block of the current block from the starting point according to the comparison result; and
a threshold determination unit (53) for determining the predetermined threshold that is a criterion for selecting a starting point suitable for searching in the reference picture for the best matching block of the current block, and **characterised in that** the threshold determination unit is arranged to determine the predetermined threshold using costs indicating differences between neighboring blocks of the current block and blocks of the reference picture corresponding to the neighboring blocks.

**10.** A video encoding method comprising:

(a) calculating a motion vector using a motion estimation method according to any of claims 1 to 7;
(b) generating a prediction picture of the current picture from the reference picture using the calculated motion vector;
(c) subtracting the generated prediction picture from the current picture in order to generate a difference between the current picture and the generated prediction picture; and
(d) encoding the difference between the current picture and the generated prediction picture.

**11.** The video encoding method of claim 10, wherein the step (d) of encoding the difference comprises:

transforming the difference between the current picture and the prediction picture from a color domain to a frequency domain;

quantizing the transformed values; and

performing entropy encoding on the quantized values.

**12.** A computer-readable recording medium having recorded thereon a program for implementing a video encoding method according to any of claims 10 and 11.

**13.** A video encoder comprising:

a motion estimation apparatus according to claim 9 for calculating a motion vector using a threshold that is a criterion for determining a starting point suitable for searching in a reference picture for the best matching block of the current block of the current picture;

a motion compensation unit (42) for generating a prediction picture of the current picture from the reference picture using the calculated motion vector;

a subtraction unit (43) for subtracting the generated prediction picture from the current picture in order to generate a difference between the current picture and the generated prediction picture; and

an encoding unit (46) for encoding the difference between the current picture and the generated prediction picture.

**Patentansprüche**

**1.** Bewegungsschätzverfahren zur Videocodierung mit folgenden Schritten:

(a) Vergleichen eines Aufwands, der eine Differenz zwischen einem aktuellen Block eines aktuellen Bildes und einem Block eines Referenzbildes angibt, das durch einen Startpunkt mit einem vorgegebenen Schwellenwert spezifiziert ist,

(b) selektives Suchen nach dem am besten passenden Block des aktuellen Blocks vom Startpunkt aus gemäß dem Vergleichsergebnis von (a), und

(h) Bestimmen des vorgegebenen Schwellenwertes, der ein Kriterium für die Auswahl eines Startpunktes ist, welcher geeignet ist, im Referenzbild nach dem am besten passenden Block des aktuellen Blocks zu suchen,

und **dadurch gekennzeichnet, dass** der Schritt (h) des Bestimmens das Bestimmen des vorgegebenen Schwellenwertes unter Verwendung von Aufwänden umfasst, die Unterschiede zwischen benachbarten Blöcken des aktuellen Blocks und Blöcken des Referenzbildes, die den benachbarten Blöcken entsprechen, anzeigen.

**2.** Bewegungsschätzverfahren nach Anspruch 1, wobei (b) das Suchen nach dem am besten passenden Block des aktuellen Blocks vom Startpunkt aus umfasst, wenn der Aufwand kleiner als der vorgegebene Schwellenwert ist.

**3.** Bewegungsschätzverfahren nach Anspruch 1, ferner umfassend (c) das Auswählen mindestens eines zusätzlichen Startpunktes zusätzlich zum Startpunkt, wenn der Aufwand nicht unter dem vorgegebenen Schwellenwert liegt.

**4.** Bewegungsschätzverfahren nach Anspruch 3, ferner umfassend:

(d) Vergleichen des Mindestaufwands unter den Aufwänden, die Unterschiede zwischen dem aktuellen Block und den Blöcken des durch die zusätzlichen Startpunkte spezifizierten Referenzbildes anzeigen, und den Aufwänden, die den Unterschied zwischen dem aktuellen Block und dem durch den Startpunkt spezifizierten Block des Referenzbildes anzeigen, und

(e) Suchen im Referenzbild nach dem am besten passenden Block des aktuellen Blocks aus dem zusätzlichen Startblock mit den minimalen Aufwänden, wenn der Mindestaufwand geringer ist als der Aufwand, der die Differenz zwischen dem aktuellen Block und dem durch den Startpunkt spezifizierten Block des Referenzbildes angibt.

**5.** Bewegungsschätzverfahren nach Anspruch 3, ferner umfassend:

(f) Vergleichen des Mindestaufwands, der die Differenz zwischen dem aktuellen Block und dem durch den zusätzlichen Startpunkt spezifizierten Block des Referenzbildes angibt, mit dem vorgegebenen Schwellenwert, und

(g) Auswählen eines weiteren zusätzlichen Startpunktes zusätzlich zu den zusätzlichen Startpunkten, wenn der Mindestaufwand größer als der vorgegebene Schwellenwert ist.

6. Bewegungsschätzverfahren nach Anspruch 1, wobei der Schritt (h) des Bestimmens das Bestimmen des vorgegebenen Schwellenwertes unter Verwendung eines Aufwands umfasst, der eine Differenz zwischen einem über dem aktuellen Block befindlichen Block und einem Block des Referenzbildes entsprechend dem über dem aktuellen Block befindlichen Block anzeigt, einen Aufwand, der eine Differenz zwischen einem Block oberhalb und rechts des aktuellen Blocks und einem Block des Referenzbildes, der dem Block oberhalb und auf der rechten Seite des aktuellen Blocks entspricht, anzeigt, und einen Aufwand, der eine Differenz zwischen einem Block, der sich auf der linken Seite des aktuellen Blocks befindet, und einem Block des Referenzbildes, der dem Block auf der linken Seite des aktuellen Blocks entspricht, anzeigt.

7. Bewegungsschätzverfahren eines beliebigen vorhergehenden Anspruchs, wobei der Schritt (b) des selektiven Suchens nach dem am besten passenden Block das Durchführen einer Suche nach einem vorgegebenen lokalen Suchalgorithmus umfasst.

8. Computerlesbares Aufzeichnungsmedium mit einem darauf aufgezeichneten Programm für das Durchführen eines Bewegungsschätzverfahrens nach einem beliebigen vorhergehenden Anspruch.

9. Vorrichtung zur Bewegungsschätzung eines Videocodierers, **dadurch gekennzeichnet, dass** sie Folgendes umfasst:

eine Vergleichseinheit (41) zum Vergleichen eines Aufwands, der eine Differenz zwischen einem aktuellen Block eines aktuellen Bildes und einem Block eines Referenzbildes angibt, das durch einen Startpunkt mit einem vorgegebenen Schwellenwert spezifiziert ist,
eine Sucheinheit (56) zum selektiven Suchen nach dem am besten passenden Block des aktuellen Blocks vom Startpunkt aus gemäß dem Vergleichsergebnis, und
eine Schwellenwertbestimmungseinheit (53) zum Bestimmen des vorgegebenen Schwellenwertes, der ein Kriterium zum Auswählen eines Startpunktes ist, welcher geeignet ist, in dem Referenzbild nach dem am besten passenden Block des aktuellen Blocks zu suchen,
und **dadurch gekennzeichnet, dass** die Schwellenwertbestimmungseinheit angeordnet ist, um den vorgegebenen Schwellenwert unter Verwendung von Aufwänden zu bestimmen, die Unterschiede zwischen benachbarten Blöcken des aktuellen Blocks und Blöcken des Referenzbildes entsprechend den benachbarten Blöcken anzeigen.

10. Videocodierverfahren, umfassend:

(a) Berechnen eines Bewegungsvektors unter Verwendung eines Bewegungsschätzverfahrens nach einem der Ansprüche 1 bis 7,
(b) Erzeugen eines Vorhersagebildes des aktuellen Bildes aus dem Referenzbild unter Verwendung des berechneten Bewegungsvektors,
(c) Subtrahieren des erzeugten Vorhersagebildes vom aktuellen Bild, um eine Differenz zwischen dem aktuellen Bild und dem erzeugten Vorhersagebild zu erzeugen, und
(d) Codieren der Differenz zwischen dem aktuellen Bild und dem erzeugten Vorhersagebild.

11. Videocodierverfahren nach Anspruch 10, wobei der Schritt (d) des Codierens der Differenz Folgendes umfasst: Transformieren der Differenz zwischen dem aktuellen Bild und dem Vorhersagebild von einem Farbbereich in einen Frequenzbereich, Quantisieren der transformierten Werte, und Durchführen einer Entropiecodierung der quantisierten Werte.

12. Computerlesbares Aufzeichnungsmedium mit einem darauf aufgezeichneten Programm zum Durchführen eines Videocodierverfahrens nach einem beliebigen der Ansprüche 10 und 11.

13. Videocodierer, umfassend: eine Bewegungsschätzvorrichtung nach Anspruch 9 zum Berechnen eines Bewegungsvektors unter Verwendung eines Schwellenwertes, der ein Kriterium zur Bestimmung eines Startpunktes ist, welcher geeignet ist, in einem Referenzbild nach dem am besten passenden Block des aktuellen Blocks des aktuellen Bildes zu suchen, eine Bewegungskompensationseinheit (42) zum Erzeugen eines Vorhersagebildes des aktuellen Bildes aus dem Referenzbild unter Verwendung des berechneten Bewegungsvektors,
eine Subtraktionseinheit (43) zum Subtrahieren des erzeugten Vorhersagebildes von dem aktuellen Bild, um eine Differenz zwischen dem aktuellen Bild und dem erzeugten Vorhersagebild zu erzeugen, und
eine Codiereinheit (46) zum Codieren der Differenz zwischen dem aktuellen Bild und dem erzeugten Vorhersagebild.

## Revendications

1. Procédé d'estimation de mouvement pour vidéocodage, comprenant les étapes suivantes :

   (a) comparaison d'un coût indiquant une différence entre un bloc actuel d'une image courante et un bloc d'une image de référence spécifié par un point de départ avec un seuil prédéterminé ;
   (b) recherche sélective du meilleur bloc d'adaptation du bloc courant depuis le point de départ selon le résultat de la comparaison de (a) ; et
   (h) détermination du seuil prédéterminé, qui est un critère pour la sélection d'un point de départ approprié pour la recherche, dans l'image de référence, du meilleur bloc d'adaptation de la détermination du bloc actuel ; et

   **caractérisé en ce que** l'étape (h) de la détermination comprend la détermination du seuil prédéterminé en utilisant des coûts indiquant des différences entre des blocs voisin du bloc actuel et des blocs de l'image de référence correspondant aux blocs voisins.

2. Procédé d'estimation de mouvement selon la revendication 1, (b) comprenant la recherche du meilleur bloc d'adaptation du bloc courant depuis le point de départ si le coût est inférieur au seuil prédéterminé.

3. Procédé d'estimation de mouvement selon la revendication 1, comprenant en outre (c) la sélection d'au moins un point de départ additionnel en plus du point de départ, si le coût n'est pas inférieur au seuil prédéterminé.

4. Procédé d'estimation de mouvement selon la revendication 3, comprenant en outre :

   (d) la comparaison du coût minimum parmi les coûts indiquant des différences entre le bloc courant et des blocs de l'image de référence, spécifiés par les points de départ additionnels, avec le coût indiquant la différence entre le bloc courant et le bloc de l'image de référence spécifié par le point de départ ; et
   (e) la recherche dans l'image de référence du meilleur bloc d'adaptation du bloc courant depuis le bloc de départ additionnel présentant les coûts minimums si le coût minimum est inférieur au coût indiquant la différence entre le bloc courant et le bloc de l'image de référence spécifiée par le point de départ.

5. Procédé d'estimation de mouvement selon la revendication 3, comprenant en outre :

   (f) la comparaison du coût minimum indiquant la différence entre bloc courant et le bloc de l'image de référence spécifié par le point de départ additionnel avec le seuil prédéterminé ; et
   (g) la sélection d'un autre point de départ additionnel en plus des points de départ additionnels, si le coût minimum est supérieur au seuil prédéterminé.

6. Procédé d'estimation de mouvement selon la revendication 1, l'étape (h) de la détermination comprenant la détermination du seuil prédéterminé en utilisant un coût indiquant une différence entre un bloc situé au-dessus du bloc courant et un bloc de l'image de référence correspondant au bloc situé au-dessus du bloc courant, un coût indiquant une différence entre un bloc situé au-dessus et à droite du bloc courant et un bloc de l'image de référence correspondant au bloc situé au-dessus et à droite du bloc courant, et un coût indiquant une différence entre un bloc situé à gauche du bloc courant et un bloc de l'image de référence correspondant au bloc situé à gauche du bloc courant.

7. Procédé d'estimation de mouvement selon une quelconque des revendications précédentes, l'étape (b) de la recherche sélective du meilleur bloc d'adaptation comprenant l'exécution d'une recherche selon un algorithme de recherche locale prédéterminé.

8. Support d'enregistrement lisible par ordinateur, sur lequel est enregistré un programme pour la mise en oeuvre d'un procédé d'estimation de mouvement selon une quelconque des revendications précédentes.

9. Appareil d'estimation de mouvement d'un encodeur vidéo, **caractérisé en ce qu'**il comprend :

une unité de comparaison (41) pour comparer un coût indiquant une différence entre un bloc courant d'une image courante et un bloc d'une image de référence spécifié par un point de départ avec un seuil prédéterminé ; une unité de recherche (56) pour la recherche sélective du meilleur bloc d'adaptation du bloc courant depuis le point de départ selon le résultat de la comparaison ; et une unité de détermination du seuil (53) pour la détermination du seuil prédéterminé, qui est un critère pour la sélection d'un point de départ approprié pour la recherche, dans l'image de référence, du meilleur bloc d'adaptation du bloc actuel ; et

**caractérisé en ce que** l'unité de détermination du seuil est agencée pour la détermination du seuil prédéterminé en utilisant des coûts indiquant des différences entre des blocs voisin du bloc actuel et des blocs de l'image de référence correspondant aux blocs voisins.

10. Méthode de vidéocodage comprenant :

(a) le calcul d'un vecteur de mouvement à l'aide d'une méthode d'estimation du mouvement selon une quelconque des revendications 1 à 7 ;
(b) la génération d'une image de prédiction de l'image courante d'après l'image de référence en utilisant le vecteur du mouvement calculé ;
(c) la soustraction de l'image de prédiction générée d'après l'image courante afin de générer une différence entre l'image courante et l'image de prédiction générée ; et
(d) le codage de la différence entre l'image courante et l'image de prédiction générée.

11. Méthode de vidéocodage selon la revendication 10, l'étape (d) de codage de la différence comprenant :

la transformation de la différence entre l'image courante et l'image de prédiction d'un domaine de couleur à un domaine de fréquence ;
la quantification des valeurs transformées ; et
l'exécution d'un codage entropique des valeurs quantifiées.

12. Support d'enregistrement lisible par ordinateur sur lequel est enregistré un programme pour la mise en oeuvre d'une méthode de vidéocodage selon une quelconque des revendications 10 et 11.

13. Encodeur vidéo comprenant :

un appareil d'estimation du mouvement selon la revendication 9 pour calculer un vecteur de mouvement en utilisant un seuil qui est un critère pour la détermination d'un point de départ approprié pour la recherche dans une image de référence du bloc d'adaptation le meilleur du bloc courant de l'image courante ;
une unité de compensation de mouvement (42) pour la génération d'une image de prédiction de l'image courante d'après l'image de référence en utilisant le vecteur de mouvement calculé ;
une unité de soustraction (43) pour soustraire l'image de prédiction générée d'après l'image courante afin de générer une différence entre l'image courante et l'image de prédiction générée ; et
une unité de codage (46) pour le codage de la différence entre l'image courante et l'image de prédiction générée.

EP 1 871 115 B1

FIG. 1 (PRIOR ART)

Cost

SEARCH RANGE

FIG. 2 (PRIOR ART)

EP 1 871 115 B1

FIG. 3

## FIG. 4

EP 1 871 115 B1

FIG. 5

FIG. 6

```
                    START
                      │
        ┌─────────────────────────────┐
        │ CALCULATE MOTION VECTOR     │── 601
        │ USING THRESHOLD             │
        └─────────────────────────────┘
                      │
        ┌─────────────────────────────┐
        │ GENERATE PREDICTION FRAME   │── 602
        └─────────────────────────────┘
                      │
        ┌─────────────────────────────┐
        │ GENERATE DIFFERENCE         │
        │ BETWEEN CURRENT FRAME       │── 603
        │ AND PREDICTION FRAME        │
        └─────────────────────────────┘
                      │
        ┌─────────────────────────────┐
        │ PERFORM TRANSFORMATION      │── 604
        │ INTO FREQUENCY DOMAIN       │
        └─────────────────────────────┘
                      │
        ┌─────────────────────────────┐
        │ PERFORM QUANTIZATION        │── 605
        └─────────────────────────────┘
              │                │
  ┌──────────────────┐   ┌─────────────────────┐
  │ PERFORM ENTROPY  │   │ PERFORM INVERSE     │── 607
  │ ENCODING  ─606   │   │ QUANTIZATION        │
  └──────────────────┘   └─────────────────────┘
         │                        │
         │          ┌─────────────────────────────┐
         │          │ PERFORM TRANSFORMATION      │── 608
         │          │ INTO COLOR DOMAIN           │
         │          └─────────────────────────────┘
         │                        │
         │          ┌─────────────────────────────┐
         │          │ GENERATE RECONSTRUCTED      │── 609
         │          │ FRAME                       │
         │          └─────────────────────────────┘
         │                        │
                    END
```

## FIG. 7

```
                    ┌─────────┐
                    │  START  │
                    └─────────┘
                         │
                         ├──(A)
                         ▼
        ┌─────────────────────────────┐
        │       DETERMINE Th(L)        │── 701
        └─────────────────────────────┘
                         │
                         ├──(B)
                         ▼
        ┌─────────────────────────────┐
        │         SELECT I(0)          │── 702
        └─────────────────────────────┘
                         │
                         ▼
        ┌─────────────────────────────┐
        │      CALCULATE Cost(0)       │── 703
        └─────────────────────────────┘
                         │
                      704│
                         ▼
                    ◇─────────◇      NO    ┌─────────────────────────────┐
                  ╱ Cost(0) <   ╲──────────│      SELECT I(1) – I(N)      │── 705
                  ╲   Th(L) ?   ╱   (C)    └─────────────────────────────┘
                    ◇─────────◇                           │
                         │                              706│
                        YES                               ▼
                         │              ┌─────────────────────────────┐
                         │              │   CALCUALTE Cost(1) – Cost(N) │── 706
                         │              └─────────────────────────────┘
                         │                           │
                         │                           ├──(D)
                         │              NO           ▼    707
                         │  ◄────────────────◇─────────────◇
                         │                 ╱ Cost(0) < Cost(min) ╲
                         │                 ╲        ?        ╱
                         │                   ◇─────────────◇
                         │                          │
                         │                         YES        709
                         ▼                          ▼
        ┌─────────────────────────────┐  ┌─────────────────────────────┐
        │  DETERMINE THAT I(0) IS      │  │ DETERMINE THAT I(M) HAVING   │── 709
        │         SUITABLE             │──708│   Cost(MIN) IS SUITABLE    │
        └─────────────────────────────┘  └─────────────────────────────┘
                         │                          │
                         │◄─────────────────────────┘
                         ▼
        ┌─────────────────────────────┐
        │     PERFORM LOCAL SEARCH     │── 710
        └─────────────────────────────┘
                         │
                         ▼
        ┌─────────────────────────────┐
        │   CALCULATE MOTION VECTOR    │── 711
        └─────────────────────────────┘
                         │
                         ▼
                    ┌─────────┐
                    │   END   │
                    └─────────┘
```

# FIG. 8

```
              (A)
               │
               ▼
     ┌───────────────────┐
     │        Th=0        │——— 801
     └───────────────────┘
               │──(E)
               ▼
     ┌───────────────────┐
     │ GENERATE RECONSTRUCTED │——— 802
     │        FRAMES      │
     └───────────────────┘
               │──(F)
               ▼
     ┌───────────────────┐
     │   CALCULATE PSNR   │——— 803
     └───────────────────┘
               │
               ▼
          ╱─────────╲
   YES   ╱  PSNR >    ╲——— 804
◄────────   PSNR(L) ?  
          ╲           ╱
           ╲─────────╱
               │ NO
               ▼
     ┌───────────────────┐
     │      Th(L)=Th      │——— 806
     └───────────────────┘
               │
               ▼
              (B)
```

```
┌───────────────────┐
│      Th=Th+Δ       │——— 805
└───────────────────┘
```

FIG. 9

## FIG. 10

N=0 — 1001

SELECT I(N) — 1002

CALCULATE COST(N) — 1003

N < NUMBER OF ADDITIONAL STARTING POINTS — 1004

N=N+1 — 1005

NO

YES

C

D

## FIG. 11

N=0 — 1101

SELECT I(N) — 1102

Cost(N)를 산출 — 1103

Cost(N) < Th(L) ? — 1104

N=N+1 — 1105

NO

YES

C

D

FIG. 12

| VIDEO | CONVENTIONAL | | WITH EARLY DECISION MECHANISM | | FULL-SEARCH | | DEGREE OF IMPROVEMENT (dB) |
|---|---|---|---|---|---|---|---|
| | SEARCH POINT | PSNR | SEARCH POINT | PSNR | SEARCH POINT | PSNR | |
| STEFAN | 10.73 | 24.05 | 12.00 (Δ1.27) | 26.38 | 1089 | 26.38 | +2.33 |
| FOREMAN | 8.47 | 32.24 | 8.87 (Δ0.4) | 33.56 | 1089 | 33.56 | +1.32 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1294194 A1
- US 5786860 A

- EP 0535746 A2